# EUROPEAN PATENT SPECIFICATION

(11) **EP 2 212 109 B1**
(45) Date of publication and mention of the grant of the patent: **21.12.2016**
(21) Application number: 08851365.0
(22) Date of filing: 19.11.2008
(51) Int. Cl.: B32B 7/10, B32B 7/04, B32B 27/08, B32B 27/36, B32B 27/40, B32B 27/34, B32B 27/28, B32B 1/08

(54) **MULTILAYER CONSTRUCTIONS**
MEHRSCHICHTIGE KONSTRUKTIONEN
CONSTRUCTIONS MULTICOUCHES

(30) Priority: 21.11.2007 EP 07022558
(43) Date of publication of application: 04.08.2010
(73) Proprietor: DSM IP Assets B.V., 6411 TE Heerlen (NL)
(72) Inventor: HEUVEL, VAN DEN, Paul Willem Jan, NL-6225 KK Maastricht (NL); TIJSSEN, Pascal, Maria, Hubert, Pierre, NL-6191 NT Beek (NL)
(74) Representative: Dorrestijn, Antoon
(86) International application number: PCT/EP2008/065826
(87) International publication number: WO 2009/065853

(56) References cited:
- EP-A- 0 569 683
- US-A- 5 474 109
- DATABASE WPI Week 199809 Thomson Scientific, London, GB; AN 1998-090351 XP002479322 & JP 09 317986 A (TOPPAN PRINTING CO LTD) 12 December 1997 (1997-12-12)
- DATABASE WPI Week 199808 Thomson Scientific, London, GB; AN 1998-081453 XP002479323 & JP 09 314725 A (TOPPAN PRINTING CO LTD) 9 December 1997 (1997-12-09)

## Description

The invention relates to a method or process for adhering a polyamide part or layer to a polyester part or layer. The invention also relates to multilayer constructions, such as tubes, hoses, films and sheets, and more particular to multilayer constructions comprising a layer consisting of a polymer composition or polymeric material comprising a polyamide polymer or copolymer thereof, such as a thermoplastic polyamide or an elastomeric polyamide and a second layer consisting of a polymer composition comprising a polyester polymer or a copolymer thereof, such as a thermoplastic polyester or copolyester elastomer. The invention also relates to multicomponent parts comprising a first part made of a polymeric material comprising a polyamide polymer or copolymer thereof and a part made of a polyester composition.

Multilayer constructions generally comprise layers consisting of different materials performing different functions or attributing different properties to the multilayer constructions. Such a multilayer construction is known, for example, from WO-02/14727-A1. The known multilayer construction of WO-02/14727-A1 concerns a plastic tube for transporting a motor vehicle fluid such as fuel, having a multilayer structure, from inside outwards: an inner polyamide layer, a linking layer made of polyethylene and maleic anhydride copolymer, a high density polyethylene (HDPE) layer and a polyether ester copolymer layer with elastomeric properties.

The polyamide is used herein for the following properties: good compatibility with hydrocarbons (absence of chemical reaction or dissolution), barrier against components in fuel liquids, and mechanical strength. The polyethylene / maleic anhydride copolymer is used for adhesion between the polyamide and the HDPE. The HDPE is a barrier for alcohol in the fuel and mechanical reinforcement of the tube. The polyether ester copolymer is used to impart flexibility and impact resistance, and abrasion resistance and protects against liquids like oil and salt solutions.

In fact for several applications not requiring an alcohol barrier, the main functions of the plastic tube of WO-02/14727-A1 are already fulfilled by the inner polyamide layer and the outer polyether ester layer. In fact it would be desirable for reasons of costs and complexity reduction to have plastic tubes and other plastic applications with as few layers as possible.

A general problem with multilayer constructions is adhesion between layers consisting of different materials. This is typically the case for multilayer constructions comprising one or more polyamide layers. Furthermore, adhesion of polyether esters, as with polyesters in general, to other materials such as HDPE, but also to polyamide is generally bad. To overcome this problem, often a so-called adhesion layer or tie-layer is used.

In WO-02/14727-A1 the linking layer between the polyamide layer and the HDPE layer is such an adhesion layer. However between the polyether ester layer and the HDPE layer no adhesion layer is used, although also here adhesion problems can be expected.

The same problem of insufficient or lack of adhesion is also observed in other applications wherein thermoplastic polyesters and/or copolyether esters have to be combined with polyamides, for example in 2K-molded parts and overmoulded parts. Copolyester elastomers are also known as TPE-E and as copolyester block copolymers.The polyether ester copolymer in WO-02/14727-A1 is such a copolyester elastomer.

EP-A-0 569 683 discloses a coextruded hollow profile obtained by moulding a polyamide layer next to a layer comprising a blend of a thermoplastic polyester and a polyurethane elastomer. The aim of the present invention is to provide a method for increasing the adhesion between polyester materials and polyamide in multilayer constructions and/or multicomponent moulded objects

The aim is further to provide multilayer constructions and multicomponent objects comprising a part or layer made of polymeric polyamide, and a second part or layer made of polyester material, showing improved adhesion between the polymeric material and the polyester material.

This aim has been achieved by the method and the multilayer constructions and multicomponent objects according to the invention wherein the polyester material comprises either
(X) a thermoplastic polyester comprising urethane linkages, and/or
(Y) a polyurethane elastomer and a thermoplastic polyester.

Herein the thermoplastic polyester may be any thermoplastic polyester which can be processed above its softening temperature. Suitably, the thermoplastic polyester is a straight thermoplastic polyester, or a copolymer thereof. A straight thermoplastic polyester is herein understood to be a polymer essentially consisting of repeat units derived from dicarboxylic acids and short chain diols. Optionally, and in particular where applicable according to the invention, the straight thermoplastic polyester can also be modified with urethane groups.

Such a straight thermoplastic polyester might comprise small amounts of other units as well, such a small amounts of units derived from trifunctional or higher functional alcohols and trifunctional or higher functional carboxylic acids. Also small amounts of other repeat units might be present. Apart from the optional urethane groups, the straight thermoplastic polyester preferably consists for at least 90 weight %, relative to the total weight of the polyester, of repeat units derived from dicarboxylic acids and short chain diols.

For the thermoplastic polyester also copolymers of polyesters based on repeat units derived from dicarboxylic acids and short chain diols and polymers based on other repeat units may be used.

Suitable polyester copolymers that can be used in the present invention are copolyester elastomers. A copolyester elastomer typically comprises polyester hard blocks (E) and polymeric soft blocks (S), wherein the polyester hard blocks (E) are based on repeat units derived from dicarboxylic acids and short chain diols.

In a preferred embodiment of the invention the thermoplastic polyester comprising urethane linkages of (X) comprises either
(i) a straight thermoplastic polyester comprising urethane linkages, and/or
(ii) a copolyester elastomer comprising urethane linkages.

Herein (i) and (ii) are optionally blended with a thermoplastic polyester not comprising urethane linkages, such as a copolyester elastomer or a straight thermoplastic polyester, or a mixture thereof, each of these copolyester elastomer and straight thermoplastic polyester optionally not comprising urethane linkages. Also the thermoplastic polyester present in combination with the polyurethane elastomer of option (Y) can be either a copolyester elastomer and /or a straight thermoplastic polyester, each of which optionally do not comprise urethane linkages.

In a special embodiment, the thermoplastic polyester is a blend of polyurethane and a copolyester elastomer and/or a straight thermoplastic polyester. This blended combination of polyurethane and polyester has the advantage of being readily formulated and produced, with the proportion of the two components able to be readily controlled and optimized depending upon the desired combination of adhesive and mechanical properties.

The copolyester elastomer (ii) comprises next to the polyester hard blocks (E) and the polymeric soft blocks (S), urethane linkages (U). For compactness and readability, such a copolyester elastomer will be denoted herein as TPE-EUS. In distinction thereof, a copolyester elastomer comprising polyester hard blocks (E) and polymeric soft blocks (S), but not comprising urethane linkages will be denoted herein as TPE-ES. A polyurethane elastomer is considered herein to be a thermoplastic elastomer comprising polyurethane hard blocks (U) and polymeric soft blocks (S), and will be denoted herein as TPU. The thermoplastic polyester comprising urethane linkages differs from the TPE-EUS in that the thermoplastic polyester does not comprise soft blocks. Such a polyester will be denoted herein also as PEU.

TPE-EUS, especially straight TPE-EUS, are particularly preferred given their combination of mechanical and adhesive properties. In general, branched TPE-EUS are not preferred due to their lower elongation at break properties.

The method according to the invention for mutually adhering a polymeric material comprising a polyamide polymer or a copolymer thereof, and a polyester material comprising a polyester polymer or a copolymer thereof, comprises steps of
a. selecting for the polymeric material a polyamide material (A) comprising a thermoplastic polyamide polymer or a copolymer thereof and having a melting temperature or softening temperature TA,
b. selecting for the polyester material a polyester material (B) having a melting temperature or softening temperature TB and comprising: (X) a thermoplastic polyester comprising urethane linkages; and/or (Y) a polyurethane elastomer comprising polyurethane hard blocks (U) and polymeric soft blocks (S) (TPU), and a thermoplastic polyester
c. heating the polyamide material (A) to a temperature T1 and heating the polyester material (B) to a temperature T2, wherein either
   i. T1 is above TA and T2 is above TB, or
   ii. T1 is above TA and T2 is below TB, and (T1+T2)/2 > TB, or
   iii. T1 is below TA and T2 is above TB, and (T1+T2)/2 > TA,
d. processing the polyamide material (A) at T1 if T1 is above TA and/or processing the polyester material (B) at T2 if T2 is above TB,
e. contacting the polyamide material (A) and the polyester material (B) thereby forming an interface area (Z) across which area the polyamide material (A) and the polyester material (B) are in direct contact with each other, and
f. cooling the polyamide material (A) and the polyester material (B) while maintaining the direct contact between (A) and (B) to a temperature below TA and TB.

In this method steps a-b precede steps c-e, which in turn precede step f, and wherein steps a and b may be performed simultaneously or separately, in this order or in reversed order, and wherein steps c, d and e may be performed simultaneously or separately, in this order or in any reversed order.

As mentioned above the thermoplastic polyester comprising urethane linkages (option X) might be
i. a straight thermoplastic polyester with urethane linkages (PEU); and/or
ii. a copolyester elastomer comprising polyester hard blocks (E), polymeric soft blocks (S) and urethane linkages (U) (TPE-EUS),
each of which, respectively the PEU (in case i) and the TPE-EUS (in case ii) may optionally be blended with a thermoplastic polyester, such as a copolyester elastomer comprising polyester hard blocks (E) and polymeric soft blocks (S) and/or a straight thermoplastic polyester, each optionally not comprising urethane linkages.

Also the thermoplastic polyester combined with the polyurethane elastomer comprising polyurethane hard blocks (U) and polymeric soft blocks (S) (TPU), in option Y, may be a copolyester elastomer or straight thermoplastic polyester, or a mixture thereof, each optionally not comprising urethane linkages.

In case the polyamide polymer in the polyamide material (A) is a semi-crystalline polyamide polymer having a melting temperature (TmA), or comprises such a semi-crystalline polymer, the softening temperature TA is represented by that melting temperature. In case the polyamide polymer in the polyamide material (A) consists of an amorphous polyamide polymer having a main glass transition temperature (TgA), the softening temperature TA is represented by that glass transition temperature.

Analogously in case the polyester polymer in the polyester material (B) is a semi-crystalline polyester polymer having a melting temperature (TmB), or comprises such a semi-crystalline polymer, the softening temperature TB is represented by that melting temperature. In case the polyester polymer in the polymeric material (B) consists of an amorphous polymer having a main glass transition temperature (TgB), the softening temperature TB is represented by that glass transition temperature.

Preferably, the polyamide material (A) comprises a semi-crystalline polyamide polymer having a melting temperature (TmA). Also preferably, the polyester material (B) is a semi-crystalline polyester polymer having a melting temperature (TmB). When these preferred cases are combined, part d of the method according to the invention equally reads as:
- heating the polyamide material (A) to a temperature T1 and heating the polyester material (B) to a temperature T2, wherein either
   i. T1 is above TmA and T2 is above TmB, or
   ii. T1 is above TmA and T2 is below TmB, and (T1+T2)/2 > TmB, or
   iii. T1 is below TA and T2 is above TmB, and (T1+T2)/2 > TmA,

It is noted here that the values for the melting temperature or glass transition temperature of polyamide material (A) and polyester material (B) mentioned here above and below and throughout this invention refer to melting temperatures and glass transition temperatures determined by differential scanning calorimetry (DSC) (2nd run, 10°C/min.) The melting temperature is measured according to ASTM D3418-97, under nitrogen, using the following temperature profile: heating from room temperature to 250°C with a rate of 10°C/min; holding the material at 250°C for 2 minutes; cooling the material to -100°C with a rate of 10°C/min; holding the material at - 100°C for 2 minutes; and heating the material to 250°C with a rate of 10°C/min. The melting temperature is determined for the second heating as the temperature falling in the melting range and showing the highest melting rate. The glass transition temperature is measured according to ASTM E 1356-91 using the same temperature profile and determined for the second heating as the temperature at the peak of the first derivative (with respect of time) of the parent thermal curve corresponding with the inflection point of the parent thermal curve. For materials with a melting temperature of 230°C or higher, the maximum temperature of 250°C is increased to 300°C. Analogously, for materials with a melting temperature of 280°C or higher, the maximum temperature of 250°C is increased to 350°C.

The effect of the urethane groups in the polymer, or one of the polymers, in the polyester material (B) in combination with the steps comprised by the method according to the invention is that better adhesion between the polyamide material (A) and the polyester material (B) is obtained. This adhesion is typically better than in case of a corresponding method wherein no urethane groups are present. The improved adhesion is achieved without the need of an additional intermitting adhesion or tie layer between the polyamide material (A) and the polyester material (B). Meanwhile the high temperature properties of the polyester material comprising the thermoplastic polyester and/or polyester elastomer and the multilayer constructions and multicomponent objects prepared from these polyester materials are maintained or even improved.

In contrast, with for example the polyether ester copolymer of WO-02/14727-A1 such good an adhesion would not have been obtained without the measures of the method according to the present invention.

The polyamide material (A) of which the layer or part (I) is composed comprises a thermoplastic polyamide polymer or a copolymer thereof. The thermoplastic polyamide may be any polyamide polymer or copolymer that can be processed above the softening temperature and is suitable for making multi-material products such as used for multilayer hoses, multilayer tubes, multilayer films and multilayer sheets, as well as for 2K moulded parts and overmoulded parts are preferred. In particular straight thermoplastic polyamides and polyamide elastomers can be used. Suitably, the thermoplastic polyamide is a homo- or copolymer of an aliphatic or semi-aromatic polyamide. Likewise, the thermoplastic polyamide is an amorphous or semi-crystalline polyamide.

Examples of suitable straight thermoplastic polyamides are PA6, PA8, PA10, PA11, PA12, PA46, PA66, PA4T, PA6T, PA8T, PA9T, PA6I, PA612, and any copolyamides and mixtures thereof. Preferably the polyamide is selected from the group consisting of PA6, PA66, PA8, PA10, PA11, PA12 and PA612, or any copolymer and/or mixture thereof.

Polyamide elastomers are polyamide polymers typically comprising hard blocks consisting of semi-crystalline polyamide segments and polymeric soft blocks, generally indicated with the annotation TPE-A. Likewise polymeric soft blocks consist of polyether segments. Such polyamide elastomers are also known as polyetheramide block copolymers. Suitably, the copolyamide elastomer is a copolyetheramide block copolymer, which are available, for example, under the trade name PEBAX from Arkema, or Vestamid from Degussa, and Ubesta XPA from Ube.

Preferably the polyamide material (A) used in the method according to the invention as well as in the multilayer construction and multicomponent object comprises a thermoplastic polyamide and/or a copolyamide elastomer (TPE-A).

The polyamide material (A) may comprise other components, and optionally comprises one or more other polymeric components and/or one or more additives. The additives and other component that are optionally present in the polyamide material (A) may be any additive or component that is suitably used in the multi-material products. Additives that may be comprised in the said polyamide composition include the usual additives, known by the person skilled in the art of making polyamide moulding compositions and layered products, films and sheets. Suitable additives are, for example, stabilizers, such as UV stabilizers, heat stabilizers and antioxidants, colorants, processing aids, for example mould release agents and lubricants, flow improving additives, such as polyamide oligomers, agents for improving the impact resistance, fillers, reinforcing agents, such as carbon fibers and glass fibers, and flame retardants, such as halogen containing flame retardants, halogen free flame retardants and flame retardant synergists. The polyamide composition may optionally also contain polymers other than polyamides.

It is noted that reinforcing agents are frequently used in compositions for injection moulded products, and only exceptionally so in multilayered products.

Preferably the polymeric material A comprises
a) 30-100 wt.% of thermoplastic polyamide polymer,
b) 0-25 wt.% polymeric components other than the thermoplastic polyamide polymer, the wt.% of b) being relative to the total weight of the thermoplastic polyamide and the other polymeric components,
c) 0-50 wt.% reinforcing agents,
d) 0-50 wt.% inorganic fillers and/or flame retardants,
e) 0-20 wt.% other additives,
wherein the wt.% of a) c), d) and e) are relative to the total weight of the polymeric material A.

The soft blocks in the TPE-EUS, the TPE-ES and the TPU used in the present invention may be chosen from polymers varying widely in composition. The soft blocks may comprise, for example polyether soft blocks, polyester soft blocks, and/or polycarbonate soft blocks. The TPE-EUS with polyether soft blocks will also be denoted herein as copolyether - urethane - ester elastomer. The TPE-EUS with polyester soft blocks will also be denoted herein as copolyester - urethane - ester elastomer, and the TPE-EUS with polycarbonate soft blocks will also be denoted herein as copolycarbonate - urethane - ester elastomer

With a copolyether - urethane - ester elastomer is herein understood a block copolymer containing hard segments consisting of blocks of a high-melting crystalline or semi-crystalline aromatic or semi-aromatic polyester and soft segments consisting of blocks of a low-melting polyether, and wherein the hard segments and the soft segments can be connected with or alternated with urethane groups or urethane linkages. Suitably, the copolyether - urethane - ester elastomer is made of hard polyester segments made up of repeating units derived from an aromatic dicarboxylic acid and an aliphatic diol, and of soft segments made up of polyglycolethers, also known as poly(alkylene oxides). Examples of poly(alkylene oxides) that are suitable soft segments in the copolyether ester elastomer are poly(ethylene oxide), poly(propylene oxide) and poly(tetramethylene oxide), and random copolymers and block-copolymers thereof. Copolyether- urethane - ester elastomers as well as the preparation thereof are described, for example, in the PCT patent application WO99/51656.

With a copolyester - urethane - ester elastomer is herein understood a block copolymer containing hard segments consisting of blocks of a high-melting crystalline or semi-crystalline aromatic or semi-aromatic polyester and soft segments consisting of blocks of a low-melting polyester diol, and wherein the hard segments and the soft segments can be connected with or alternated with urethane groups or urethane linkages. Suitably, the copolyester- urethane - ester elastomer is made of hard polyester segments made up of repeating units derived from an aromatic dicarboxylic acid and an aliphatic diol, and of soft segments made up of either an aliphatic diol and an aliphatic dicarboxylic acid or a lactone, or a combination thereof. Copolyester - urethane - ester elastomers as well as the preparation thereof, are described, for example, in European patent EP-0102115-B1.

With a copolycarbonate - urethane - ester elastomer is herein understood a block copolymer containing hard segments consisting of blocks of a high-melting crystalline or semi-crystalline aromatic or semi-aromatic polyester and soft segments consisting of blocks of a low-melting polycarbonate containing polymeric component, wherein the hard segments and the soft segments are connected with or alternated with urethane groups or urethane linkages. Suitably, the copolycarbonate - urethane - ester elastomer is made of hard polyester segments made up of repeating units derived from an aromatic dicarboxylic acid and an aliphatic diol, and of soft segments made up of repeating units of an aliphatic carbonate. Optionally the soft segments are made up of randomly distributed repeating units of an aliphatic carbonate and repeating units derived from either an aliphatic diol and an aliphatic dicarboxylic acid, or from a lactone, or from a combination thereof. Copolycarbonate- urethane - ester elastomers as well as the preparation thereof are described, for example, in European patent EP-0846712-B1.

The aromatic dicarboxylic acid in the hard segments of the TPE-ES and the TPE-EUS can be, for example, terephthalic acid, isophthalic acid, naphthalene dicarboxylic acid and biphenyl dicarboxylic acid, or a mixture thereof. The hard segments may comprise, next to the aromatic dicarboxylic acid, other dicarboxylic acids such as cycloaliphatic dicarboxylic acids. Preferably, other dicarboxylic acids are present in minor amount, i.e. less than 50 mole %, preferably less than 25 mole %, or even better less than 10 mole%, relative to the total molar amount of dicarboxylic acid in the hard blocks.

The aliphatic diol can be, for example, ethylene diol (also known as ethylene glycol), propylene diol, butylene diol (also known as 1,4-butane diol), hexamethylene diol, or a mixture thereof. The hard segments are preferably made up of repeating units derived from an aromatic dicarboxylic acid comprising terephthalic acid and an aliphatic diol comprising ethylene glycol and/or 1,4-butane diol. More preferably, the hard segments are made of terephthalic acid and 1,4-butane diol.

The thermoplastic polyester used in the present invention comprises ester repeat units derived from an aromatic dicarboxylic acid and an aliphatic diol, optionally combined with repeat units derived from an aliphatic dicarboxylic acid and an aliphatic diol. The molar amount of the latter repeat units is preferably less than 50 %, more preferably less than 25 % or even less than 10% of the total molar amount of the ester repeat units in the thermoplastic polyester. For the ester repeat units derived from an aromatic dicarboxylic acid and an aliphatic diol, the same components and preferred embodiments thereof as described above for the TPE-ES and TPE-EUS, can be used.

Preferably, the thermoplastic polyester not comprising urethane linkages is PBT or PET. Also preferably, the thermoplastic polyester comprising urethane linkages is derived from PBT or PET.

The TPE-EUS and the TPU used in the present invention comprise urethane linkages just like the thermoplastic polyester comprising urethane linkages, i.e. the PEU. The urethane linkages may be derived from difunctional isocyanates, or diisocyanates, and can have been formed by reaction of the diisocyanates with for example long chain diols and short chain diols. The diisocyanates used for the preparation of the said polymers might have comprised some small amount of higher functional isocyanates and/or monofunctional isocyanate. Diisocyanates can be represented by the formula OCN-R-NCO. Urethane groups are chemically represented by the following formula: -O-C(O)-NH-. The urethane linkages derived from diisocyanates can be represented by repeat units having the following structure: -O-C(O)-NH-R-NH-C(O)-O-.

In both formulas OCN-R-NCO and -O-C(O)N(H)-R-N(H)C(O)-O-, R can represent an aliphatic diradical moiety, an aliphatic-aromatic diradical moiety, or an aromatic diradical moiety.

The aliphatic diradical moiety can be either linear, branched or cyclic, or a combination thereof, such as cyclo-aliphatic biradical, and preferably contains 2-15 carbon atoms.

Diisocyanates that can be used and from which the urethane linkages in the present invention may be derived are, for example, aromatic diisocyanates such as toluenediisocyanate (TDI) (R = -C₆H₃(-CH₃)-), phenyl diisocyanate (R = -C₆H₄-) and methylenediphenyldiisocyanate or difenylmethane- diisocyanate (MDI) (R = (-C₆H₄-CH₂-C₆H₄-), aliphatic-aromatic diisocyanates such as tetramethylxylilene diisocyanate (TMXDI) (R = -(CH₃)₂C-C₆H₄-CH(CH₃)₂-), and aliphatic diisocyanates such hexane diisocyanate or hexamethylene- diisocyanate (HMDI) (R = -(CH₂)₆-), cyclohexane diisocyanate )CHDI' (R = -C₆H₁₀-) or isophorone/diisocyanate (IPDI) (R = -C₆H₇-(CH₃)₃-)- Preferably, the diisocyanate is an aromatic diisocyanate, more preferably methylenediphenyldiisocyanate (MDI). The advantage of MDI is an even better contribution to the thermal stability of the products during processing of the polyester material (B). The advantage of MDI in the polymers used in the method and products according to the invention is its contribution to the thermal stability of the multilayered products respectively multicomponent products comprising the TPE-EUS, respectively the TPU and/or PEU.

The urethane linkages may be present in the polyester composition (B), used in the method or according to the invention or present in the products comprising a layer or part made thereof, in an amount varying over a wide range. For calculating the amount of urethane linkages one could use the structure of the repeat units -O-C(O)-NH-R-NH-C(O)-O-. Rather, for practical reasons it is preferred to use the formula for the diisocyanates from which the repeat units have been derived. The amounts thus calculated formally exclude the O and H atoms originating from the -OH end groups of the long chain and short chain diols. By doing so the urethane linkages can be represented by the formula -O-C-N-R-N-C-O-.

The content of in the TPE-EUS and the PEU, respectively the TPU in the polyester composition (B) as well as the amount of urethane linkages therein, may be varied over a large range. The amount may be varied for example by blending the TPE-EUS, the PEU and/or the TPU with various amounts of a copolyester elastomer and/or thermoplastic polyester not comprising polyurethane linkages.

Surprisingly already at very low content of urethane linkages an affect on the adhesion is observed. This allows the use of TPE-EUS and the PEU with a very low urethane content, or the use of a very low amount of TPU in the blends with a copolyester elastomer and/or thermoplastic polyester. When the TPE-EUS or PEU is blended with another copolyester elastomer and/or thermoplastic polyester, the amount of urethane linkages in the TPE-EUS or PEU itself might be needed to be higher to observe a detectable increase in adhesion.

This effect increases with increasing amount, whereas at even higher content for the urethane linkages, the increase in adhesion may level of and there might not be observed a further increase in the adhesion. Simultaneously, but not necessarily so, other relevant properties might be compromised. Therefore, the content of urethane linkages, represented by the formula -O-C-N-R-N-C-O-, is preferably at most 20 wt.%, relative to the total weight of the total weight of polymer components in the polyester material (B). More preferably, the urethane linkages are present in an amount of 0.5 -15 wt.%, or 1- 10 wt.%, and even more preferably 2-6 wt.%, relative to the total weight of the total weight of polymer components in the polyester material (B).

The advantage of the lower maximum amount of the urethane linkages is that the high temperature stability and mechanical properties of the polyesters and/or the low temperature flexibility of the copolyester elastomer are better retained.

The amounts of the hard and soft blocks in the TPE-EUS, and the ratio thereof, may also be varied over a large range. The amount of hard block may for example be in the range of 20 - 80 wt.%, the soft segments making up for the remainder of 80-20 wt.%, although the amounts may also be beyond these ranges. The softer and more flexible the TPE-EUS needs to be, the higher the amount of soft blocks and the lower the amount of hard block will be. If a hard and rigid TPE-EUS is required the opposite will be the case. Preferably, the amount of hard block is in the range of 30 - 70 wt.%, the soft segments in the range of 70-30 wt.%, more preferably 40-60 wt.% and 60-40 wt.% respectively, relative to the total of the hard blocks and soft blocks. For sake of clarity it is noted that in these weight percentages the weight and amount of the urethane linkages is not included.

The amount of soft blocks, hard blocks and urethane linkages in the TPE-EUS can be regulated by modifying the length of the respective blocks and type of diisocyanate used. The person skilled in the art of making copolyester elastomers can find the preferred amounts by routine experiments.

The polyester material (B) preferably comprises a TPE-EUS. The polyester material (B) may comprise a mixture of different polymers, and preferably comprises a TPE-EUS next to another polymer component or other polymer components. Preferably the TPE-EUS is herein present in an amount in the range of 15 - 100 wt.%, more preferably 25-90 wt.%, still more preferably 40-75 wt.%, relative to the total weight of polymer components in the polyester material (B).

Preferably, the other polymer is a TPE-ES. In a preferred embodiment the polyester material (B) comprises a blend of a TPE-EUS and a TPE-ES in a weight ratio of 1:4 - 4:1, more preferably 1:2 - 2:1, and the content of urethane linkages therein is in the range of 2-6 wt.%, relative to the total weight of the total weight of polymer components in the polyester material (B). It has been observed that by blending the TPE-EUS with another TPE-E an even better adhesion is obtained than with the TPE-EUS alone, while both the high temperature mechanical properties as well as the low temperature flexibility of the polyester elastomer are better retained.

Preferably the TPE-ES is a copolyether ester elastomer. Copolyether ester elastomers are widely available and find the broadest application of all copolyester elastomers. These copolyester elastomers suffer from a bad adhesion to thermoplastic polyamides and polyamide elastomers, and with the addition of, or blending with, for example, a TPE-EUS as according to the present invention, these materials can be adhered to the said polyamide (co)polymers.

With a copolyether ester elastomer is herein understood a block copolymer containing hard segments consisting of blocks of a high-melting crystalline or semi-crystalline aromatic or semi-aromatic polyester and soft segments consisting of blocks of a low-melting polyether. Suitably, the copolyether ester elastomer is made of hard polyester segments made up of repeating units derived from an aromatic dicarboxylic acid and an aliphatic diol, and of soft segments made up of polyglycolethers, also known as poly(alkylene oxides). Examples of poly(alkylene oxides) that are suitable soft segments in the copolyether ester elastomer are poly(ethylene oxide), poly(propylene oxide) and poly(tetramethylene oxide), and random copolymers and block-copolymers thereof.

Also preferably, the soft segment in the copolyether ester elastomer is made up of poly(tetramethylene oxide). A comprehensive description of copolyether ester elastomers and their preparation can be found in Encyclopedia of Polymer Science and Technology, Volume 12, pages 76-177 (1985) and the references reported therein.

The polyester material B may comprise next to the mentioned thermoplastic polyesters, copolyester elastomers and TPU other polymeric components and additives. The additives and other component that are optionally present in the polyester material (B) may be any additive or component that is suitably used in polyester materials or the multi-material products made thereof. Additives that may be comprised in the said polyester composition include the usual additives, known by the person skilled in the art of making polyester moulding compositions and layered products, films and sheets. Suitable additives are, for example, stabilizers, such as UV stabilizers, heat stabilizers and antioxidants, colorants, processing aids, for example mould release agents and lubricants, flow improving additives, such as polyester oligomers, agents for improving the impact resistance, fillers, reinforcing agents, such as carbon fibers and glass fibers, and flame retardants, such as halogen containing flame retardants, halogen free flame retardants and flame retardant synergists. The polyester composition may optionally also contain polymers other than polyesters and TPU. It is noted that reinforcing agents are frequently used in compositions for injection moulded products, and only exceptionally so in multilayered products.

Preferably the polyester material B consists of:
a) 30-100 wt.% thermoplastic polyester comprising urethane linkages, and/or TPU plus thermoplastic polyester,
b) 0-25 wt.% polymeric components other than thermoplastic polyester and TPU, relative to the total weight of the thermoplastic polyesters, TPU and the other polymeric components,
c) 0-50 wt.% reinforcing agents,
d) 0-50 wt.% inorganic fillers and/or flame retardants,
e) 0-20 wt.% other additives,
wherein the weight percentages (wt.%) of a), c), d) and e) are relative to the total weight of the polyester material B.

In the method according to the invention, steps a-b, wherein polymer composition (A) and polyester composition (B) are selected, precede steps c-e, wherein A and B are heated, processed and contacted with each other, followed by cooling in step f. In this process steps a and b may be performed simultaneously or separately, in this order or in reversed order.

Also steps c, d and e may be performed simultaneously or separately, in this order or in any reversed order. For example, both materials A and B may be feed to separate extrusion apparatus wherein the materials are heated, subsequently extruded, and than contacted. This order is of processing is advantageously applied for 2K injection moulding of multicomponent parts or for coextrusion of multicomponent films and sheets.

Alternatively, the two materials may be shaped individually into parts, which parts are contacted with each other and than thermally welded together, for example by vibration welding or laser welding.

The melting or softening temperatures TA and TB of respectively materials A and B may differ over a wide range. The materials A and B, and the polymers used therein may have similar or different melting temperatures.

The process is advantageously applied for material combinations wherein each of TA and TB are at least 150°C, more preferably at least 175°C, 190°C, or even 200°C. Preferably at least one of TA and TB is at most 260°C, more preferably at most 240°C or even at most 220°C.

A higher minimum temperature allows for better high temperature property retention of the products made by the method. A lower maximum melting temperature for at least one of TA and TB allows for easier processing with a broader process window and reduced risk of degradation of the urethane linkages.

The heating of the polymers may be performed in different ways, the selection of which may be done in function of the process that is applied. For example heating of the materials such that T1 is above TA and T2 is above TB can advantageously be applied in a 2K injection moulding or coextrusion process.

The method wherein A and B are heated such that T1 is above TA, T2 is below TB, and (T1+T2)/2 > TB, and subsequently A is processed, or such that T1 is below TA, T2 above TB, and (T1+T2)/2 > TA, and subsequently B is processed, can advantageously be applied in processes wherein a layer of one of the materials is applied on the other material, such as in a film calandering process or in a part overmoulding process.

In the method according to the invention, T1 and T2 can be widely varied provided that the requirements in respect of TA and TB are complied with. Preferably A and B are heated such that either T1 is in the range between 0 and 50°C above TA, and (T1+T2)/2 is in the range between 0 and 50°C above TB, or T2 is in the range between 0 and 50°C above TB, and (T1 +T2)/2 is in the range between 0 and 50°C above TA. More preferably, each of the ranges is limited to 5-40°C, or 10-30°C, or even better 15-25°C above the respective reference temperature TA or TB.

The method according to the invention can advantageously be applied for the production of a multilayer construction and/or multicomponent object. More particular the method can be used for the production of a multilayer construction and/or multicomponent object comprising a layer or part (I) consisting of the polyamide material (A) and a layer or part (II) consisting of the polyester material (B), and wherein the layer or part (I) and the layer or part (II) are in direct contact with each other across the interface area Z.

Products that can be produced by using the method according to the invention include multilayer constructions such as a multilayer hose, a multilayer tube, a multilayer film or a multilayer sheet, multicomponent objects such as 2K moulded part or an overmoulded part.

The resulting elimination of an interposed or intermitting adhesion or tie layer has important consequences in that production processes become simplified, inventory can be reduced and production set-up can be simpler and cheaper, the combined properties of the polyamide material (A) and the polyester material (B) do not have to be compromised by the properties of such an intermitting adhesion or tie layer, the multilayer constructions might be produced with thinner cross sections, and prior to overmoulding of a polyamide part with a copolyester layer there is no need to apply first another layer.

The invention also relates to the multilayer construction obtained by the method described in claim 1, comprising a layer (I) consisting of a polyamide material (A) and a layer (II) consisting of a polyester material (B), wherein the polyester material (B) comprises a polyester material according to options (X) and (Y) mentioned above, preferably comprising
(X) a thermoplastic polyester comprising urethane linkages, and/or
(Y) a polyurethane elastomer and a thermoplastic polyester,
and wherein the polymeric layer (I) and the polyester layer (II) are in direct contact with and adhered to each other across the interface area Z.

Herein the thermoplastic polyester of X, respectively of Y, is preferably a straight thermoplastic polyester and /or copolyester elastomer, in case Y optionally comprising urethane linkages but likewise not, and in case X always comprising urethane linkages.

The adhesion between the polyester layer and the polyamide layer can be measured with a peel test, for example with a T-peel test according to ASTM standard method D1876-00e1.

Preferably, the adhesion between layer (I) and layer (II), measured with a T-peel test as described herein further below, is at least 0.20 N/mm, more preferably at least 0.40 N/mm.

In one embodiment of the invention, the multilayer construction comprises a third layer (III), in direct contact with layer (II), wherein the third layer consists of a polyester material (C), wherein the layer (II) constitutes an adhesion or tie layer between layer (I) and layer (III).

The effect of the layer (II) between layer (I) and layer (III) in this embodiment is that an improved adhesion is obtained between the polyamide layer (I) and the polyester layer (III), two materials which are otherwise very hard to be adhered, while the other properties of the multicomponent layer imparted by the "external" layers are well maintained.

The polyester layer (III) comprises a polyester optionally comprising or being a straight polyester, lacking soft blocks, and/or a copolyester elastomer, preferably a copolyester elastomer. By choice of type, combination and ratio of straight polyester and/or a copolyester elastomer, the properties of layer (III), for example the hardness, can be tuned at will without loosing, due to the presence of layer (II), the adhesion properties between layer (I) and layer (III).

The multilayer construction according to the invention suitably is a multilayer hose, a multilayer tube, a multilayer film or a multilayer sheet.

The multilayer construction according to the invention may be varied in many aspects depending on the needs of the application for which the multilayer construction is intended.

For example the thickness of the layers (I) and (II) and the optional layer (III) may be varied over a wide range. The thickness of each of the layers may be as low as, for example, 1 µm or even lower, in for example films, as well as high as 10 mm, or even higher, in for example tubes. Preferably, the thickness is in the range of 5 µm - 5 mm, 10 µm - 2 mm, 25 µm - 1 mm, 50 µm - 0.5 mm, 100 µm - 250 µm.

The invention also relates to a multicomponent object, obtained by the method described in claim 1, comprising a part or layer (I) consisting of a polyamide material (A) and a layer or part (II) consisting of a polyester material (B), at least one of (I) and (II) is a three-dimensional part, wherein the polyester material (B) comprises:
(X) a thermoplastic polyester comprising urethane linkages, and/or
(Y) a polyurethane elastomer (TPU) and a thermoplastic polyester,
and wherein (I) and (II) are in direct contact with, and adhered to each other across an interface area Z.

Also herein the thermoplastic polyester of X, respectively of Y, is preferably a straight thermoplastic polyester and /or copolyester elastomer, in case Y optionally comprising urethane linkages but likewise not, and in case X always comprising urethane linkages.

The multicomponent object suitably is a 2K moulded part, or an overmoulded part comprising a net shaped body made of the polyamide material (A) having a surface area at least partially covered with the polyester elastomeric material (B).

The invention is further illustrated with the following examples and comparative experiments.

### Experimental

### Materials

The following materials were used.

| | |
|---|---|
| TPE-ES | TPE-E with PBT hard blocks and polytetramethyleneglycol (PTMG) based polyether soft blocks, Shore D 63, melting temperature 210°C. |
| TPE-EUS-1 | TPE-E with PBT hard blocks, polycarbonate soft blocks and 5% urethane linkages based on MDI, Shore D 55, melting temperature 190°C. |
| TPE-EUS-2 | TPE-E with PBT hard blocks,polyester soft blocks and 5% urethane linkages based on MDI, Shore D 55, melting temperature 195°C. |
| PA | Standard grade polyamide 6. melting temperature 220°C. |

### Sample preparation

The materials were used as such or blended in the ratios indicated in table one and co-extruded to form a 3-layered film composed of 2 external layers consisting PA and an intermediate layer consisting of TPE-EUS-1, TPE-EUS-2 or TPE-E, or a combination of TPE-EUS-1 and TPE-E.

For the co-extrusion the following conditions were applied. The processing of the materials into multi layer films was done on the Collin multi-layer cast film line. The equipment consisted of 3 extruders (denoted A, B and C, with extruder B not in use), a feed block and a die. The feed block consisted of a 5 layer symmetrical A-B-C-B-A film processor, with channels B being blocked. The die had a slit opening, 300 mm wide and 0,5 mm high. The set-up of the extruders A and C was as follows: A: 30/25D extruder with 3 zone screw for used for the outer layers; C: 30/30D extruder with 3 zone mixing screw for the central or barrier layer. The films were made as symmetrical A-C-A layered films, with the polyester layer sandwiched between two identical polyamide layers. For the polyamide material (extruder A) a temperature profile was applied such that the temperature gradually increased up to approximately 270°C at the extruder head. For the polyester material (extruder C) a temperature profile was applied such that the temperature gradually increased up to approximately 270°C at the extruder head. The feed block and the die were set at 250°C and the thickness of the foil produced was about 100 µm.

### Testing: Adhesion by T-peeltest.

The method applied for measuring the adhesion between the polyester layer and the polyamide layer is the T-peel test according to ASTM standard method D1876-00e1. The T-peeltest was performed on a Zwick Z010 tensile machine, equipped with a TestControl Unit, testXpert II, V2.01 Software and a 100N, kap-Z Load-cell, or a similar apparatus. The test was performed at ambient temperature (±23°C) using a traverse displacement with a constant speed of 150mm/min. The measured adhesion forces (in N) were normalized to a normalized adhesion force (in N/mm) by correction for the width of the test samples.

### Test results

The compositions of the 3-layered films and the materials used therein and the results obtained with these films in the peel test have been summarized in table 1.

**Table 1 Compositions of the 3-layered films and the results from the peel test for Examples I-VI (EX-I - EX-VI) and Comparative Experiment A (CE-A).**

| | CE-A | EX-I | EX-II | EX-III | EX-IV | EX-V | EX-VI |
|---|---|---|---|---|---|---|---|
| Outer layers (A) PA | 100 | 100 | 100 | 100 | 100 | 100 | 100 |
| Central layer (C) | | | | | | | |
| TPE-ES | 100 | 95 | 90 | 75 | 50 | - | - |
| TPE-EUS-1 | | 5 | 10 | 25 | 50 | 100 | |
| TPE-EUS-2 | | | | | | | 100 |
| Urethane content (wt.%) | 0 | 0.25 | 0.5 | 1.25 | 2.5 | 5 | 5 |
| Adhesion force (N/mm) | 0.006 (5) | 0.011 (8) | 0.017 (3) | 0.195 (145) | 1.489 (63) | 1.306 (43) | 1.34 (49) |
| Adhesion | - | +/- | +/- | + | ++ | ++ | ++ |

### Comparative Experiments B-D

### Overmolding of TPE-EUS and TPE-ES on PA.

The overmolding experiment was done on an Arburg 150 injection molding machine. First plates were molded of the PA material, using a standard injection molding machine and standard injection molding conditions for polyamide-6. The size of the plates was 120x120x2 mm. The injection conditions were as follows: screw temperature setting was 220°C at the intake, gradually rising to 250°C at the die; the injection speed was 150 mm/min, mold temperature was 40°C, the holding time was 1 second and the holding pressure was 30 bar. For the overmolding experiment in which the PA plates were used as the substrate the mold size is altered to 120x120x4 mm. A PA plate is inserted in the closing side of the mold after which the overmolding resin is molded against the PA plaque. Overmolding conditions were as follows: Screw temperature is rising from the intake to the die from 220°C to 250°C, injection speed is 150 mm/min, mold temperature is 40°C, holding time is 5 seconds and holding pressure is 30 bar.

### Test results

The compositions of the overmolded plaques and the materials used therein and the results obtained with these plaques have been summarized in table 2.

**Table 2. Compositions of the overmolded plaques and the adhesion results**

| | CE-B | CE-C | CE-D |
|---|---|---|---|
| Substrate layer | PA | PA | PA |
| Overmolding layer | TPE-ES | TPE-EUS-1 | TPE-EUS-2 |
| Urethane content (wt.%) | 0 | 5 | 5 |
| Adhesion | No | No | No |

## Claims

1. Method for mutually adhering a polymeric material comprising a polyamide polymer or a copolymer thereof, and a polyester material comprising a polyester polymer or a copolymer thereof, comprising steps of
a. selecting for the polymeric material a polyamide material (A) comprising a thermoplastic polyamide and having a softening temperature TA,
b. selecting for the polyester material a polyester material (B) having a softening temperature TB and comprising
(X) a thermoplastic polyester comprising urethane linkages; and/or
(Y) a polyurethane elastomer comprising polyurethane hard blocks and polymeric soft blocks, and a thermoplastic polyester,
c. heating the polyamide material (A) to a temperature T1 and heating the polyester material (B) to a temperature T2, wherein either
i. T1 is above TA and T2 is above TB, or
ii. T1 is above TA and T2 is below TB, and (T1+T2)/2 > TB, or
iii. T1 is below TA and T2 is above TB, and (T1+T2)/2 > TA,
d. processing the polyamide material (A) at T1 if T1 is above TA and/or processing the polyester material (B) at T2 if T2 is above TB,
e. contacting the polyamide material (A) and the polyester material (B) thereby forming an interface area (Z) across which area the polyamide material (A) and the polyester material (B) are in direct contact with each other, and
f. cooling the polyamide material (A) and the polyester material (B), while maintaining the direct contact between (A) and (B), to a temperature below TA and TB,
and wherein TA and TB are measured by differential scanning calorimetry (DSC) (2nd run, 10°C/min.).

2. Method according to claim 1, wherein the thermoplastic polyester of (X) comprises
i. a straight thermoplastic polyester comprising urethane linkages; and/or
ii. a copolyester elastomer comprising polyester hard blocks, polymeric soft blocks and urethane linkages.

3. Method according to claim 2, wherein the copolyester elastomer comprises polyether soft blocks, polyester soft blocks, and / or polycarbonate soft blocks,
and/or hard blocks comprising repeat units derived from PBT or PET, and/or urethane linkages derived from methylene-diphenyl-diisocyante.

4. Method according to any one of the above claims, wherein the content of the urethane linkages, represented by the formula of -O-C-N-R-N-CO-, is in the range of 0.5-20 wt.%, based on the total weight of polymeric components in polyester composition B.

5. Method according to any one of the above claims, wherein the method is used for the production of a multilayer construction and/or multicomponent object comprising
- a first layer or part (I) consisting of the polyamide material (A) and
- a second layer or part (II) consisting of the polyester material (B), and
wherein the first layer or part (I) and the second layer or part (II) are in direct contact with each other across an interface area (Z).

## Patentansprüche

1. Verfahren zum Verkleben eines Polymermaterials, das ein Polyamidpolymer oder ein Copolymer davon umfasst, und eines Polyestermaterials, das ein Polyesterpolymer oder ein Copolymer davon umfasst, bei dem man
a. für das Polymermaterial ein Polyamidmaterial (A) wählt, das ein thermoplastisches Polyamid umfasst und eine Erweichungstemperatur TA aufweist,
b. für das Polyestermaterial ein Polyestermaterial
(B) wählt, das eine Erweichungstemperatur TB aufweist und
(X) einen thermoplastischen Polyester, der Urethanbindungen umfasst; und/oder
(Y) ein Polyurethanelastomer, das harte Polyurethanblöcke und weiche Polymerblöcke umfasst, und einen thermoplastischen Polyester
umfasst,
c. das Polyamidmaterial (A) auf eine Temperatur T1 erhitzt und das Polyestermaterial (B) auf eine Temperatur T2 erhitzt, wobei entweder
i. T1 über TA liegt und T2 über TB liegt oder
ii. T1 über TA liegt und T2 unter TB liegt und (T1+T2)/2 > TB oder
iii. T1 unter TA liegt und T2 über TB liegt und (T1+T2)/2 > TA,
d. das Polyamidmaterial (A) bei T1 verarbeitet, wenn T1 über TA liegt, und/oder das Polyestermaterial (B) bei T2 verarbeitet, wenn T2 über TB liegt,
e. das Polyamidmaterial (A) und das Polyestermaterial (B) in Kontakt bringt, wodurch eine Grenzfläche (Z) gebildet wird, über die das Polyamidmaterial (A) und das Polyestermaterial (B) in direktem Kontakt miteinander stehen, und
f. das Polyamidmaterial (A) und das Polyestermaterial (B) unter Aufrechterhaltung des direkten Kontakts zwischen (A) und (B) auf eine Temperatur unter TA und TB abkühlt,
wobei TA und TB durch Differentialkalorimetrie (DSC) (2. Lauf, 10°C/min) gemessen werden.

2. Verfahren nach Anspruch 1, bei dem der thermoplastische Polyester von (X)
i. einen geraden thermoplastischen Polyester, der Urethanbindungen umfasst; und/oder
ii. ein Copolyesterelastomer, das harte Polyesterblöcke und weiche Polymerblöcke und Urethanbindungen umfasst;
umfasst.

3. Verfahren nach Anspruch 2, bei dem das Copolyesterelastomer weiche Polyetherblöcke, weiche Polyesterblöcke und/oder weiche Polycarbonatblöcke und/oder harte Blöcke, die von PBT oder PET abgeleitete Wiederholungseinheiten umfassen, und/oder von Methylendiphenyldiisocyanat abgeleitete Urethanbindungen umfasst.

4. Verfahren nach einem der obigen Ansprüche, bei dem der Gehalt der Urethanbindungen, die durch die Formel -O-C-N-R-N-CO- wiedergegeben werden, im Bereich von 0,5 bis 20 Gew.-%, bezogen auf das Gesamtgewicht von polymeren Komponenten in Polyesterzusammensetzung B, liegt.

5. Verfahren nach einem der obigen Ansprüche, bei dem das Verfahren zur Herstellung eines Mehrschichtaufbaus und/oder eines mehrkomponentigen Objekts, umfassend
- eine erste Schicht bzw. einen ersten Teil (I), die bzw. der aus dem Polyamidmaterial (A) besteht, und
- eine zweite Schicht bzw. einen zweiten Teil (II), die bzw. der aus dem Polyestermaterial (B) besteht,
wobei die erste Schicht bzw. der erste Teil (I) und die zweite Schicht bzw. der zweite Teil (II) über eine Grenzfläche (Z) in direktem Kontakt miteinander stehen, verwendet wird.

## Revendications

1. Procédé pour faire adhérer mutuellement un matériau polymère comprenant un polymère de polyamide ou un copolymère de celui-ci, et un matériau en polyester comprenant un polymère de polyester ou un copolymère de celui-ci, comprenant les étapes consistant à
a. sélectionner pour le matériau polymère un matériau en polyamide (A) comprenant un polyamide thermoplastique et ayant un point de ramollissement TA,
b. sélectionner pour le matériau en polyester un matériau en polyester (B) ayant un point de ramollissement TB et comprenant
(X) un polyester thermoplastique comprenant des liaisons uréthane ; et/ou
(Y) un élastomère de polyuréthane comprenant des blocs durs de polyuréthane et des blocs mous polymères, et un polyester thermoplastique,
c. chauffer le matériau en polyamide (A) à une température T1 et chauffer le matériau en polyester (B) à une température T2, où
i. soit T1 est supérieure à TA et T2 est supérieure à TB,
ii. soit T1 est supérieure à TA et T2 est inférieure à TB, et (T1+T2)/2 > TB,
iii. soit T1 est inférieure à TA et T2 est supérieure à TB, et (T1+T2)/2 > TA,
d. traiter le matériau en polyamide (A) à T1 si T1 est supérieure à TA et/ou traiter le matériau en polyester (B) à T2 si T2 est supérieure à TB,
e. mettre en contact le matériau en polyamide (A) et le matériau en polyester (B) en formant ainsi une zone d'interface (Z) sur laquelle le matériau en polyamide (A) et le matériau en polyester (B) sont en contact direct l'un avec l'autre, et
f. refroidir le matériau en polyamide (A) et le matériau en polyester (B) tout en maintenant le contact direct entre (A) et (B), à une température inférieure à TA et TB,
et dans lequel TA et TB sont mesurés par calorimétrie à balayage différentiel (DSC) (2ème passage, 10°C/min).

2. Procédé selon la revendication 1, dans lequel le polyester thermoplastique de (X) comprend
i. un polyester thermoplastique linéaire comprenant des liaisons uréthane ; et/ou
ii. un élastomère de copolyester comprenant des blocs durs de polyester, des blocs mous polymères et des liaisons uréthane.

3. Procédé selon la revendication 2, dans lequel l'élastomère de copolyester comprend des blocs mous de polyéther, des blocs mous de polyester, et/ou des blocs mous de polycarbonate, et/ou des blocs durs comprenant des motifs répétitifs dérivés de PBT ou de PET, et/ou des liaisons uréthane dérivées de méthylène-diphényl-diisocyanate.

4. Procédé selon l'une quelconque des revendications précédentes, dans lequel la teneur en les liaisons uréthane, représentées par la formule -O-C-N-R-N-CO-, est située dans la plage allant de 0,5 à 20 % en poids par rapport au poids total des composants polymères dans la composition de polyester B.

5. Procédé selon l'une quelconque des revendications précédentes, lequel procédé est utilisé pour la production d'une construction multicouche et/ou d'un objet à plusieurs composants comprenant
- une première couche ou partie (I) constituée du matériau en polyamide (A) et
- une deuxième couche ou partie (II) constituée du matériau en polyester (B),
et dans lequel la première couche ou partie (I) et la deuxième couche ou partie (II) sont en contact direct l'une avec l'autre sur une zone d'interface (Z).
